# EUROPÄISCHE PATENTSCHRIFT

(11) **EP 2 896 215 B1**
(45) Veröffentlichungstag und Bekanntmachung des Hinweises auf die Patenterteilung: **29.06.2016**
(21) Anmeldenummer: 13747977.0
(22) Anmeldetag: 09.08.2013
(51) Int. Cl.: H04R 1/08

(54) **MIKROFONVORRICHTUNG ZUM EINBAUEN IN EINEN KRAFTWAGEN**
MICROPHONE APPARATUS FOR IMPLEMENTATION IN A VEHICLE
DISPOSITIF MICROPHONE À INCORPORER DANS UN AUTOMOBILE

(30) Priorität: 12.09.2012 DE 102012017980
(43) Veröffentlichungstag der Anmeldung: 22.07.2015
(73) Patentinhaber: Audi AG, 85045 Ingolstadt (DE)
(72) Erfinder: BARNA, Klaus-Dieter, 85080 Gaimersheim (DE)
(74) Vertreter: Brandt, Kai
(86) Internationale Anmeldenummer: PCT/EP2013/002391
(87) Internationale Veröffentlichungsnummer: WO 2014/040674

(56) Entgegenhaltungen:
- DE-U1-202008 001 684
- DE-U1-202009 010 884
- US-A1- 2005 008 184
- US-A1- 2006 135 216
- US-A1- 2011 242 942

## Beschreibung

Die Erfindung betrifft eine Mikrofonvorrichtung zum Einbauen in einen Kraftwagen. Eine solche Mikrofonvorrichtung kann z.B. in einer Freisprechanlage zum Erfassen eines Sprachsignals genutzt werden. Die Mikrofonvorrichtung weist zum Erfassen eines Umgebungsschalls eine Mikrofonkapsel auf, die in einem Gehäuse der Mikrofonvorrichtung angeordnet ist. Über das Gehäuse kann die Mikrofonkapsel z.B. in einem Verkleidungsteil des Kraftwagens gehalten sein. Ein entsprechendes Verkleidungsteil und ein Kraftwagen mit einem solchen Verkleidungsteil sind ebenfalls Bestandteil der Erfindung.

Eine Mikrofonvorrichtung der genannten Art ist beispielsweise aus der DE 20 2009 010 884 U1 bekannt. Danach ist in dem Gehäuse der Mikrofonvorrichtung noch eine Leiterplatte mit einer Verstärkerschaltung integriert, um das elektrische Mikrofonsignal verstärken zu können. Das verstärkte Signal wird über ein Kabel eines kraftfahrzeugseitigen Bordleitungssatzes aus der Mikrofonvorrichtung geführt. Das Kabel ist hierzu durch einen Kabeldurchlass des Gehäuses in dieses hinein zur Leiterplatte verlegt. Der Kabeldurchlass gewährleistet zugleich eine Zugentlastung. Bei dieser Mikrofonvorrichtung kann es verhältnismäßig umständlich sein, das Kabel mit der Leiterplatte zu kontaktieren. Hierzu muss das Gehäuse geöffnet werden. Zudem weißt die Mikrofonvorrichtung eine unerwünscht große Einbautiefe auf.

Eine der Erfindung zugrunde liegende Aufgabe ist es, eine Mikrofonvorrichtung mit geringerer Einbautiefe bereitzustellen und hierbei eine einfache Montage der Mikrofonvorrichtung in einen Kraftwagen zu gewährleisten.

Die Aufgabe wird durch eine Mikrofonvorrichtung gemäß Anspruch 1, ein Verkleidungsteil gemäß Anspruch 9 sowie einen Kraftwagen gemäß Anspruch 11 gelöst. Vorteilhafte Weiterbildungen der Erfindung sind durch die Unteransprüche gegeben.

Die erfindungsgemäße Mikrofonvorrichtung weist ebenfalls ein Gehäuse auf, in welchem zumindest eine Mikrofonkapsel zum Erfassen eines Umgebungsschalls angeordnet ist. Im Zusammenhang mit der Erfindung ist unter dem Begriff Mikrofonkapsel insbesondere ein Bauteil mit einem eigenen Mikrofongehäuse zu verstehen, das nur wenige Millimeter durchmisst und eine Mikrofonmembran und ein zugehöriges akustisch aktives Volumen enthält. Mittels des Gehäuses der Mikrofonvorrichtung kann die Mikrofonkapsel einfach in einem Kraftwagen gehalten und gegen Körperschall abgeschirmt werden.

Um die in dem Gehäuse befindliche Mikrofonkapsel elektrisch kontaktieren zu können, d.h. ihr elektrisches Mikrofonsignal (verstärkt oder unverstärkt) zu einem elektronischen Gerät des Kraftwagens leiten zu können, umfasst die Mikrofonvorrichtung auch eine elektrische Anschlussschnittstelle. Diese weist Anschlusskontakte auf, die von außerhalb des Gehäuses zugänglich sind. Es muss also, anders als eingangs beschrieben, kein Kabel in das Gehäuse hinein verlegt werden.

Um z.B. ein Kabel eines externen elektronischen Geräts mit der Anschlussschnittstelle auch mechanisch belastbar verbinden zu können, sind die Anschlusskontakte in eine mechanische Steckeinrichtung integriert, die bevorzugt als Stecker oder als Steckwanne ausgestaltet ist. Diese Steckeinrichtung ist dazu ausgelegt, mit einem zur Steckeinrichtung komplementär geformten Steckteil des elektronischen Geräts zusammengesteckt zu werden. Ist die Steckeinrichtung also beispielsweise als Steckwanne realisiert, so kann darin ein Stecker eines Kabels eingesteckt sein. Die Anschlussschnittstelle der Mikrofonvorrichtung selbst, also z.B. die Steckwanne, ist dabei erfindungsgemäß aber kabellos ausgestaltet. Hierzu ist die Steckeinrichtung als ein Teil des Gehäuses selbst ausgebildet.

Die erfindungsgemäße Mikrofonanordnung mit der kabellosen Anschlussschnittstelle weist den Vorteil auf, dass kein flexibles Kabelende von dem Gehäuse der Mikrofonanordnung absteht, was beim Einbau hinderlich sein könnte. Das komplementäre Steckteil des externen elektronischen Geräts lässt sich mit der Steckeinrichtung bequem nach dem Einbau der Mikrofonvorrichtung verbinden. Zudem ergibt sich durch den fehlenden Kabelschwanz (Englisch: Pigtail) eine verhältnismäßig geringe Bauhöhe der Mikrofonanordnung.

Durch Ausbilden der Steckeinrichtung als Steckwanne ergibt sich der weitere Vorteil, dass die Anschlusskontakte in der Steckwanne gegen mechanische Einflüsse abgeschirmt und damit vor einer versehentlichen Verformung geschützt sind. Unabhängig von der Ausgestaltung Steckeinrichtung als Stecker oder Steckwanne können die Anschlusskontakte jeweils beispielsweise als Pin oder als Buchse (d.h. als röhrenförmiger Kontakt) oder als Zunge ausgestaltet sein.

In weiterer Ausgestaltung der Erfindung ist das Gehäuse aus zumindest zwei Gehäuseschalen gebildet, die zusammen das Gehäuse ergeben. Hierdurch ergibt sich ein besonders einfacher Zusammenbau, da die Mikrofonkapsel, die Anschlusskontakte und gegebenenfalls weitere Komponenten in eine der Gehäuseschalen gelegt werden können und dann mit einer weiteren Gehäuseschale abgedeckt und gegebenenfalls zwischen den Gehäuseschalen festgeklemmt werden können. Eine besonders einfache Handhabung bei der Montage ergibt sich durch Vorsehen eines Scharniers, z.B. eines Filmscharniers, welches die Gehäuseschalen auch im geöffneten Zustand verbindet. Um die Gehäuseschalen nach dem Schließen zusammenzuhalten, kann z.B. eine Schnappverbindung oder eine Klebeverbindung vorgesehen sein. Eine bevorzugte Ausführungsform sieht aber ein Halteelement vor, z.B. einen Ring, in das die Gehäuseschalen gesteckt sind. Das Halteelement umgibt so die Gehäuseschalten und hält sie hierdurch zusammen. In dem Halteelement kann das Gehäuse wiederum durch eine Schnappverbindung gehalten sein.

Ein Halteelement zum Einstecken des Gehäuses weist den Vorteil auf, dass die Gehäuseschalen von einem einstückig ausgebildeten Bauteil umgeben sind, so dass sich keine Verbindung öffnen kann und die Gehäuseschalen auseinanderfallen können. Zudem können unterschiedliche Materialien für das Gehäuse und das Halteelement verwendet werden.

Eine Weiterbildung dieser Ausführungsform betrifft eine Schalleintrittsöffnung des Gehäuses für den Eintritt des Umgebungsschalls in das Gehäuse. Die Schalleintrittsöffnung ist bevorzugt von einem schalldurchlässigen Abdeckelement, insbesondere aus Filz oder Gewebe, abzudecken. Die rutschfeste Befestigung des Abdeckelements ist in der Regel sehr aufwändig. Bei der erfindungsgemäßen Mikrofonvorrichtung kann das Abdeckelement dagegen zwischen das Gehäuse und das Halteelement eingeklemmt und so zuverlässig vor der Schalleintrittsöffnung fixiert sein.

Eine weitere Vereinfachung des Mikrofonaufbaus ergibt sich, wenn die Mikrofonvorrichtung auch einen Zierrand für die Schalleintrittsöffnung aufweist, der im Einbauzustand der Mikrofonvorrichtung im Kraftwagen von außen sichtbar ist. Dann kann auf eine zusätzliche Blende für die Mikrofonanordnung verzichtet werden. Ein solcher Zierrand ist bei einer Weiterbildung der Erfindung durch einen die Schalleintrittsöffnung begrenzenden Bereich des Halteelements gebildet. Der Zierrand kann z.B. ein Chromring sein oder eine hochglänzende Oberfläche.

Ein zusätzlicher Vorteil durch den Verzicht auf ein zusätzliche Blende besteht darin, dass ein Schalleinlass der Mikrofonkapsel sehr nahe an der Oberfläche desjenigen Bauteils des Kraftwagen angeordnet werden kann, in das die Mikrofonvorrichtung eingebaut ist, also z.B. eines Dachmoduls oder eines anderen Verkleidungsteils. Idealerweise schließt der Schalleinlass der Mikrofonkapsel plan mit dieser Oberfläche ab. Dann ergeben sich die besonders wünschenswerte akustischen Eigenschaften der Anordnung aus Mikrofonvorrichtung und Verkleidungsteil. Entsprechend ist ein Abstand der Mikrofonkapsel von dem Zierrand betragsmäßig bevorzugt kleiner als 5 mm, insbesondere kleiner als 3 mm.

Um die Mikrofonvorrichtung einheitlich für unterschiedliche Kraftwagenmodelle verwenden zu können, die für Rechtslenker (Linksverkehr, wie z.B. in Großbritannien) bzw. für Linkslenker (Rechtsverkehr, wie z.B. in Deutschland oder in den USA) ausgelegt sind, muss eine Positionscodierung für den Einbau der Mikrofonvorrichtung in dem Kraftwagen möglich sein. Hierdurch wird beim Einbau der Mikrofonvorrichtung sichergestellt, dass die Mikrofonkapsel in die gewünschte Richtung weist. Für eine Positionscodierung sind gemäß einer Weiterbildung der Erfindung entlang eines Umfangs der Mikrofonanordnung Rastelemente ausgebildet, die unterschiedlich geformt sind und/oder entlang der Umfangsrichtung in ungleichmäßigen Abständen und/oder quer zur Umfangsrichtung unterschiedlich seitlich versetzt angeordnet sind. Als Rastelemente können z.B. Rastschlitze oder Rastnasen oder eine Mischung aus diesen vorgesehen sein. Die Unterschiede in der Ausgestaltung der Rastelemente bzw. ihre unregelmäßige Anordnung stellt durch entsprechende Gegenelemente in einer Fassung des Kraftwagens eine eindeutige Einbaulage sicher.

Um die Einbautiefe der Mikrofonvorrichtung, also die benötigte Tiefe z.B. eines Einbauschachts in einem Verkleidungsteil, besonders gering zu halten, kann vorgesehen sein, eine bestimmungsgemäße Steckrichtung zum Zusammenstecken der Steckeinrichtung mit dem komplementären Steckteil des elektronischen Geräts, also z.B. die Einsteckrichtung eines Steckers in die Steckwanne, senkrecht oder zumindest quer zu einer bestimmungsgemäßen Einbau- oder Einschubrichtung auszurichten, in welche die Mikrofonvorrichtung in eine Fassung des Verkleidungsteils zum Einbauen eingeschoben werden muss.

Wie bereits ausgeführt, gehört zu der Erfindung auch ein solches Verkleidungsteil für einen Kraftwagen. Bei dem Verkleidungsteil kann es sich beispielsweise um ein Dachmodul zum Verkleiden eines Dachhimmels oder ein Leuchtenelement oder um einen Teil eines Armaturenbretts handeln. Das Verkleidungsteil weist eine Fassungseinrichtung für eine Ausführungsform der erfindungsgemäßen Mikrofonvorrichtung auf, wobei das Verkleidungsteil eine Sichtseite aufweist, die im Einbauzustand des Verkleidungsteils im Kraftwagen sichtbar ist. Die Fassungseinrichtung sieht eine Öffnung in der Sichtseite vor, durch welche die Mikrofonvorrichtung von der Sichtseite her in das Verkleidungsteil einführbar ist. Hierdurch ergibt sich in vorteilhafter Weise eine Montagerichtung von der Verkleidungsteilvorderseite, was sich als für die Montagedauer und die Vermeidung von Fehlgriffen bei der Montage günstig erwiesen hat.

Die Fassungseinrichtung weist bevorzugt zumindest ein Anschlagelement auf, durch welches ein Einschubweg der Mikrofonvorrichtung in das Verkleidungsteil hinein auf eine vorbestimmte Länge begrenzt ist. Dann ist ein Durchdrücken der Mikrofonvorrichtung nicht möglich, so dass eine Oberfläche der Mikrofonvorrichtung plan mit der Sichtseite des Verkleidungsteils abschließen kann, ohne dass hierfür eine aufwendige Justierung notwendig ist. Bei Rückseitig montierten Mikrofonen ist eine solche Justierung dagegen in vielen Fällen nötig.

Eine Form eines Zierrands der Mikrofonvorrichtung kann an einen durch die Sichtfläche definierten Strak des Verkleidungsteils und/oder an eine Kontur der Öffnung in der Sichtseite angepasst sein.

Zu der Erfindung gehört schließlich auch ein Kraftwagen. Dieser weist eine Ausführungsform der erfindungsgemäßen Mikrofonvorrichtung oder zumindest eine Ausführungsform des erfindungsgemäßen Verkleidungsteils auf.

Im Folgenden ist die Erfindung noch einmal genauer anhand eines Ausführungsbeispiels der Erfindung erläutert. Hierzu zeigt:
- Fig. 1: eine schematische Darstellung einer Ausführungsform der erfindungsgemäßen Mikrofonvorrichtung, wobei eine perspektivische Ansicht einer Rückseite gezeigt ist, die im eingebauten Zustand nicht sichtbar ist,
- Fig. 2: eine schematische Darstellung einer perspektivischen Ansicht einer Vorderseite der Mikrofonvorrichtung von Fig. 1, die im eingebauten Zustand in einem Fahrgastraum sichtbar ist, und
- Fig. 3: eine schematische Darstellung einer perspektivischen Ansicht der Mikrofonvorrichtung von Fig. 1 im eingebauten Zustand.

Das Ausführungsbeispiel stellt eine bevorzugte Ausführungsform der Erfindung dar.

Bei dem im Folgenden.erläuterten Beispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind.

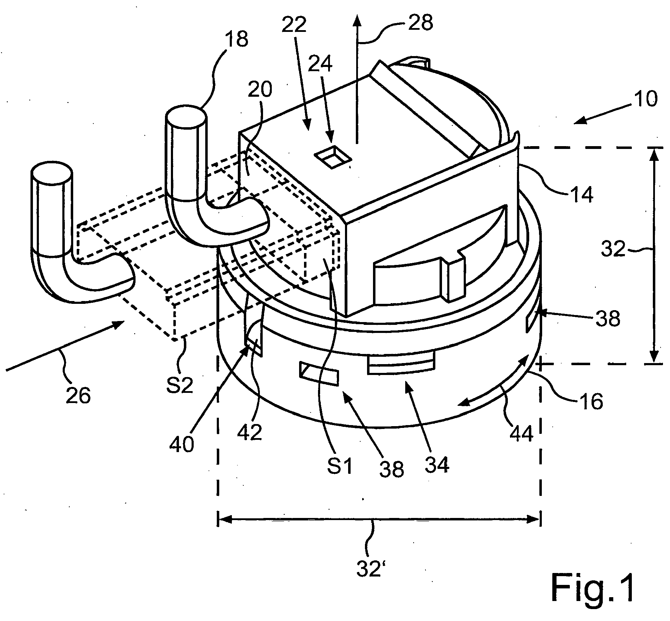

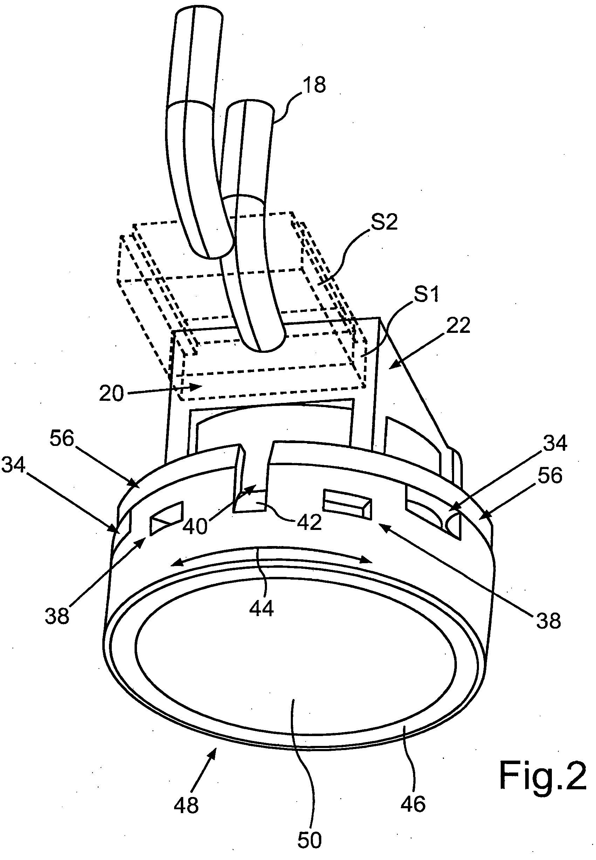

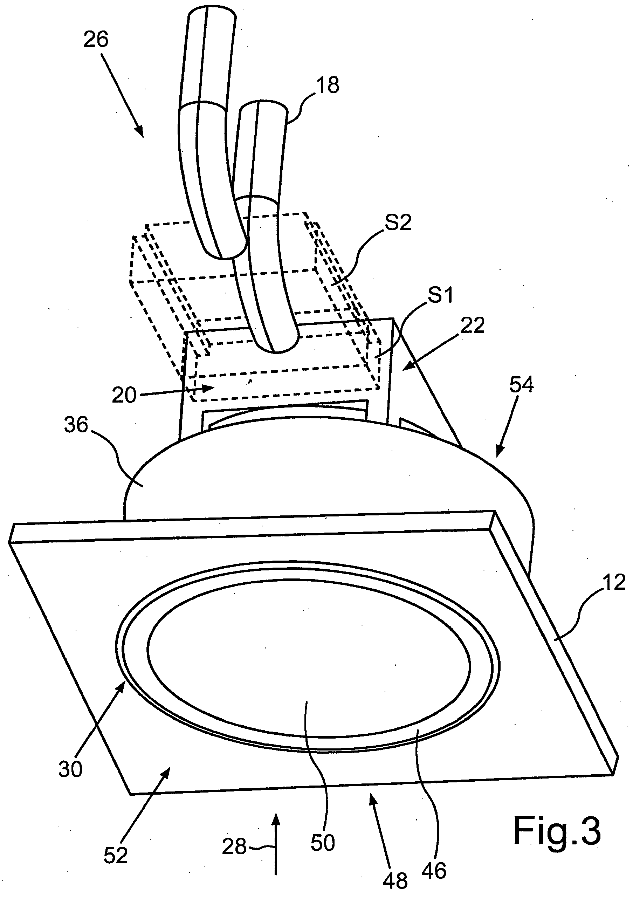

In Fig. 1 bis Fig. 3 ist eine Mikrofoworrichtung 10 gezeigt, die zur Schallwandlung beispielsweise für eine Freisprecheinrichtung oder für ein Spracherkennungssystems in einem Kraftwagen eingebaut sein kann. Bei dem Kraftwagen kann es sich insbesondere um einen Personenkraftwagen handeln. Die Mikrofonvorrichtung 10 kann in einem Verkleidungsteil 12 des Kraftwagens eingebaut sein, beispielsweise einem Deckenverkleidungsteil, einem Verkleidungsteil einer Deckenleuchte oder einem Teil eines Armaturenbretts. In Fig. 3 ist von dem Verkleidungsteil 12 nur ein Schnitt dargestellt.

Die Mikrofonvorrichtung 10 umfasst ein Gehäuse 14 und ein Halteelement 16, in welches das Gehäuse 14 eingesteckt sein kann. In dem Gehäuse 14 sind (nicht dargestellt) eine Mikrofonkapsel und Anschlusskontakte für die Mikrofonkapsel eingebaut. Die Mikrofonkapsel kann dabei optional über weitere elektrische und elektronische Komponenten mit den Anschlusskontakten gekoppelt sein, beispielsweise eine Verstärkerschaltung und/oder eine Schaltung zur Impedanzanpassung. Ein Durchmesser der Mikrofonkapsel kann beispielsweise 15 mm betragen.

Die Mikrofonvorrichtung 10 ist an ein Kabel 18 angeschlossen. In dem gezeigten Beispiel weist das Kabel 18 einen Stecker 20 auf, der in eine Steckwanne 22 der Mikrofonvorrichtung 10 eingesteckt ist und dort beispielsweise durch eine Schnappverbindung 24 gehalten wird. Die Anschlusskontakte der Mikrofonvorrichtung 10 sind in die Steckwanne 22 integriert und über den Stecker 20 mit (nicht dargestellten) Drähten des Kabels 18 elektrisch verbunden. Die Steckwanne 22 hält das Kabel 18 über dessen Stecker 20 mechanisch an der Mikrofonvorrichtung 10 fest. Die Steckwanne 22 mit den darin integrierten Anschlusskontakten stellt damit insgesamt eine Anschlussschnittstelle des Mikrofonvorrichtung 10 zum Anschließen eines elektrischen Anschlusses, d.h. hier des Kabels 18, dar. Über das Kabel 18 werden elektrische Signale der Mikrofonkapsel an ein elektronisches Gerät des Kraftwagens, z.B. die erwähnte Freisprecheinrichtung oder das Sprachsystem, übertragen.

Die Steckwanne 22 ist als Bestandteil des Gehäuses 14 ausgebildet. Die Anschlussschnittstelle ist deshalb kabellos, d.h. von dem Gehäuse 14 steht kein zur Mikrofonvorrichtung 10 gehöriger Kabelschwanz ab. Dies ist insbesondere während des Einbaus der Mikrofonvorrichtung 10 in das Verkleidungsteil 12 vorteilhaft. Das Kabel 18 muss erst nach dem Einbau der Mikrofonvorrichtung 10 mit der Mikrofonvorrichtung 10 verbunden werden. Dazu wird der Stecker 20 entlang einer Einsteckrichtung 26 in die Steckwanne 22 eingeführt. In Fig. 1 bis Fig. 3 sind zur Veranschaulichung des Einsteckwegs zwei Steckerstellungen S1 und S2 gezeigt. In der Steckerstellung S1 ist der Stecker 20 vollständig in die Steckwanne 22 eingesteckt. Unmittelbar vor dem Einstecken befindet sich der Stecker 20 dagegen in der Steckerstellung S2. In dem gezeigten Bespiel ist die Einsteckrichtung 26 senkrecht zu einer Einbaurichtung 28 ausgerichtet. Um die Mikrofonvorrichtung 10 in das Verkleidungsteil 12 einzusetzen, wurde die Mikrofonvorrichtung 10 entlang der Einbaurichtung 28 in eine Einbauöffnung 30 des Verkleidungsteils 12 eingesteckt. Die senkrechte Ausrichtung der Einsteckrichtung 26 und der Einbaurichtung 28 ergibt eine vorteilhafte, geringe Bauhöhe 32 der Mikrofonvorrichtung 10 mit eingestecktem Kabel 18. Die Bauhöhe kann in dem gezeigten Beispiels kleiner als 25 mm sein, insbesondere kleiner als 22 mm.

Das Gehäuse 14 ist in das Halteelement 16 gesteckt und kann dort z.B. durch Schnappverbindungen 34 oder auch durch eine Klebeverbindung gehalten sein. Das Haltelement 16 wiederum steckt in einer Fassung 36 des Verkleidungsteils 12 und ist dort beispielsweise durch eine Schnappverbindung gehalten. Hierzu weist das Haltelement 16 dann beispielsweise Rastschlitze 38 auf, in die Rastnasen der Fassung 36 eingreifen können. Zusätzlich kann das Halteelement 16 noch einen Führungsschlitz 40 aufweisen, in dem ein Fortsatz 42 des Gehäuses 14 angeordnet ist. Das Gehäuse 14 lässt sich so nur dann in das Halteelement 16 stecken, wenn sich der Fortsatz 42 im Führungsschlitz 40 befindet. Andernfalls wird die Bewegung des Gehäuses 14 durch den Fortsatz 42 beim Einstecken blockiert. Der Fortsatz 42, der Führungsschlitz 40 und die Schnappverbindungen 34 bilden zusammen eine Positionscodierung für das Gehäuse 14 im Halteelement 16. Genauso sind die Rastschlitze 38 entlang eines Umfangs 44 der Mikrofonvorrichtung 10 nicht in gleichmäßigen Abständen angeordnet. Hierdurch ergibt sich eine Positionscodierung des Haltelements 16 bezüglich der Fassung 36. Die beiden Positionscodierungen stellen eine eindeutige Lage der Mikrofonkapsel der Mikrofonvorrichtung 10 bezüglich des Verkleidungsteils 12 sicher.

Durch entsprechende Anordnung von Rastelemente in der Fassung 36 kann somit derselben Typ von Mikrofonvorrichtung 10 für einen Kraftwagen mit Rechtslenkung wie auch für einen Kraftwagen mit Linkslenkung verwendet werden. Eine fehlerhafte Einbaulage ist durch die Positionscodierungen des Halteelements 16 bezüglich der Fassung 36 wirkungsvoll vermieden.

Die Mikrofonvorrichtung 10 kann sehr einfach montiert werden. Das Gehäuse 14 kann dafür z.B. aus zwei Gehäuseschalen gefertigt sein, um die Mikrofonkapsel und die übrigen Komponenten im Gehäuse 14 anordnen zu können. Die Gehäuseschalen können dabei verbunden sein, z.B. mittels eines Scharniers. Nach dem Schließen des Gehäuses 14 kann dass Gehäuse 14 in das Halteelement 16 gesteckt werden. Das Halteelement 16 ist dazu in dem vorliegenden Beispiel als Ring ausgebildet, der das eingesteckte Gehäuse 14 umfasst und somit die Gehäuseschalen zusammenhält. Deshalb kann auf einen separaten Verschlussmechanismus für die Gehäuseschalen verzichtet werden.

Das Gehäuse 14 und das Haltelement 16 können z.B. aus Kunststoff und z.B. durch Spritzguss gefertigt sein. Das Gehäuse 14 und das Halteelement 16 können dabei aus unterschiedlichen Materialien gefertigt sein. Dies weist den Vorteil auf, dass für das Gehäuse 14 ein besonders körperschalldämpfendes Material und unabhängig davon für das Haltelement 16 ein besonders festes Material für einen zuverlässigen Halt in der Fassung 36 gewählt werden kann.

Der Einsteckweg des Gehäuses 14 in das Halteelement 16 kann durch einen Ring 46 des Haltelements 16 begrenzt sein. Der Ring 46 bildet einen Rand einer Schalleinlassöffnung 48 des Haltelements 16, durch die hindurch ein Schall aus dem Kraftwageninnenraum zu einer (nicht dargestellten) Schalleintrittsöffnung des Gehäuses 14 und schließlich zur Mikrofonkapsel gelangen kann. Ein Durchmesser 32' des Ringes 46 kann beispielsweise kleiner als 26 mm betragen. Dies entspricht (bei kreisrunder Ausgestaltung) auch dem Gesamtdurchmesser der Mikrofonvorrichtung 10 in Richtung senkrecht zur Einbaurichtung 28.

Die Schalleintrittsöffnung des Gehäuses 14 ist durch eine schalldurchlässige Abdeckung 50 vor einem Eindringen von Partikeln, wie Staub oder Schmutz, geschützt. Die Abdeckung 50 kann beispielsweise aus einem Filz oder einer Gaze gefertigt sein. Bei der Montage der Mikrofonvorrichtung 10 kann die Abdeckung 50 in das Halteelement 16 gelegt und zwischen dem Gehäuse 14 und dem Ring 46 festgeklemmt werden. Dieser Arbeitsschritt ist sehr effizient. Die Abdeckung 50 kann zusätzlich verklebt sein.

Der Ring 46 kann im eingebauten Zustand der Mikrofonvorrichtung 10 im Verkleidungsteil 12 von einem Kraftwageninsassen sichtbar angeordnet sein. Der Ring 46 bildet dann einen Zierrand und kann z.B. verchromt oder mit einer hochglänzenden Oberfläche versehen sein. Der Ring 46 schließt dann vorzugsweise plan mit einer Oberfläche einer Sichtseite 52 des Verkleidungsteils 12 ab, die zum Kraftwageninnenraum weist. Der Ring 46 kann aber auch z.B. bis zu 5 mm aus dem Verkleidungsteil 12 hervorstehen oder versenkt sein. Um beim Einbau der Mikrofonvorrichtung 10 deren Ausrichtung bezüglich der Oberfläche der Sichtseite 52 einfach zu gestalten, kann die Fassung 36 einen (nicht dargestellten) Anschlag 54 aufweisen, welcher den Einschubweg der Mikrofonvorrichtung 10 entlang der Einbaurichtung 28 in der Fassung 36 entsprechend begrenzt.

Eine weitere Vereinfachung der Montage ergibt sich, wenn das Halteelement 16 einen angeschrägten Rand 56 aufweist, welcher das Verkleidungsteil 12 beim Einstecken der Mikrofonvorrichtung 10 in die Einbauöffnung 30 zuerst berührt. Hierdurch gleitet die Halteeinrichtung 16 einfacher in die Einbauöffnung 30.

Durch den Einbau von der Sichtseite 52 her und durch den planen Abschluss des Ringes 46 mit der Sichtseite 52 (oder eine leicht überstehende Anordnung) kann die Mikrofonkapsel besonders nahe an der Ebene der Einbauöffnung 30 angeordnet werden. Hierdurch ergeben sich besonders gute akustische Eigenschaften für die Schallerfassung, was auch als Performanz bezeichnet wird.

Das Haltelement 16 muss nicht zwingend (wie hier dargestellt) als Ring ausgebildet sein. Entscheidend ist, dass eine Kontur der Schalleinlassöffnung 48, also hier die Innenkontur des Ringes 46, den Schalldurchtritt zur Mikrofonkapsel begünstigt. Die Außenkontur des Halteelements 16 im Bereich der Einbauöffnung 30 sollte dagegen zur Vermeidung eines zu großen sichtbaren Spaltes an die Kontur der Einbauöffnung 30 angepasst sein, die z.B. auch rechteckig ausgestaltet sein kann. Ein kleines Spaltmaß ist auch den akustischen Eigenschaften der Mikrofonanordnung, d.h. der Performanz, förderlich.

Das Halteelement 16 kann aber in einfacher Weise nicht nur an die Kontur der Einbauöffnung 30 angepasst werden. Das Halteelement 16 (und auch Halteelemente anderer Ausführungsformen der Erfindung) weisen den Vorteil auf, dass die Mikrofonvorrichtung als Sichtteil auch einfach an einen durch die Sichtfläche definierten Strak eines Verkleidungsteils angepasst werden kann, also z.B. an einen Verlauf einer Wölbung der Sichtfläche. Die Sichtfläche (hier die Sichtfläche 52) kann somit eine Freiformfläche sein, und dennoch kann der Zierrand (hier der Zierring 46) optisch in Form und Kontur mit der umgebenden Sichtfläche verschmelzen, ohne dass z.B. aufwändige Dichtmaßnahmen für die akustische Performanz nötig wären. Die erfindungsgemäße Mikrofonvorrichtung ermöglicht so in vorteilhafter Weise zusätzliche gestalterische Freiheitsgrade.

Die Anordnung der Mikrofonkapsel in dem Gehäuse 14 und die Umschließdung des Halteelements 16 durch die Fassung 36 kann auch mit geringen Aufwand derart dicht gestaltet werden, dass keine weiteren Dichtelemente zum Schutz der Mikrofonkapsel vor rückwärtigem Schall vorgesehen werden müssen. Das akustische System ist insbesondere durch die Anordnung der Mikrofonkapsel in dem Gehäuse in sich ausreichend geschlossen.

Durch das Beispiel ist gezeigt, wie ein Mikrofonkonzept realisiert werden kann, bei welchem ein einziger Bautyp für eine Mikrofonvorrichtung sowohl für rechtslenkende als auch für linkslenkende Kraftwagen breitgestellt werden kann. Es erfolgt eine Direktsteckung des Anschlusskabels an der Mikrofonvorrichtung, d.h. ein Kabelschwanz kann seitens der Mikrofonvorrichtung entfallen und es ist beim Einbau keine Leitungsverlegung nötig. Eine durch das Gehäuse gebildete Steckwanne ermöglicht eine geringe Bauhöhe.

Das Mikrofon ist sichtbar untergebracht. Eine Abdeckung für die Schalleintrittsöffnung und ein Zierring können dabei bereits in der Mikrofonvorrichtung vorhanden sein und müssen somit nicht in einem separaten Montageschritt beim Bau des Kraftwagens in diesem befestigt werden.

Ein akustisch optimaler Abstand der Mikrofonkapsel von der Außenkontur eines Dachmoduls oder eines anderen Verkleidungsteils kann mit geringem Aufwand gewährleistest werden. Eine Montage erfolgt hierzu von der Dachmodul-/ Verkleidungsteilvorderseite her. Es ist auch keine zusätzliche Schallabdichtung nötig. Ein Durchdrücken der Mikrofonvorrichtung bei der Montage ist wirkungsvoll durch einen Anschlag in der Fassung verhindert.

## Patentansprüche

1. Mikrofonvorrichtung (10) für einen Kraftwagen, aufweisend:
- eine Mikrofonkapsel zum Erfassen eines Umgebungsschalls,
- ein Gehäuse (14) zum Halten der Mikrofonkapsel, wobei die Mikrofonkapsel hierzu in dem Gehäuse (14) angeordnet ist,
- eine elektrische Anschlussschnittstelle, die von außen zugängliche Anschlusskontakte zum elektrischen Kontaktieren der in dem Gehäuse (14) befindlichen Mikrofonkapsel sowie eine mechanische Steckeinrichtung (22) zum Zusammenstecken mit einem komplementären Steckteil (20) eines elektronischen Geräts des Kraftwagens aufweist, wobei die Anschlusskontakte in die Steckeinrichtung (22) integriert sind und wobei die Anschlussschnittstelle kabellos ausgestaltet ist und hierzu die Steckeinrichtung (22) als ein Teil des Gehäuses (14) ausgebildet ist,
wobei
das Gehäuse (14) aus zumindest zwei Gehäuseschalen gebildet ist, die in ein Halteelement (16) gesteckt sind, welches die Gehäuseschalen umgibt und hierdurch zusammenhält.

2. Mikrofonvorrichtung (10) nach Anspruch 1, **dadurch gekennzeichnet, dass** die Steckeinrichtung (22) als Stecker oder als Steckwanne (22) ausgestaltet ist.

3. Mikrofonvorrichtung (10) nach Anspruch 1 oder 2, **dadurch gekennzeichnet, dass** das Halteelement (16) ein Ring ist, in welchen die Gehäuseschalen gesteckt sind.

4. Mikrofonvorrichtung (10) nach einem der vorhergehenden Ansprüche, **dadurch gekennzeichnet, dass** das Gehäuse (14) eine Schalleintrittsöffnung für den Umgebungsschall aufweist und die Schalleintrittsöffnung von einem schalldurchlässigen Abdeckelement (50), insbesondere aus Filz oder Gewebe, abgedeckt ist, dass zwischen dem Gehäuse (14) und dem Halteelement (16) eingeklemmt ist.

5. Mikrofonvorrichtung (10) nach einem der vorhergehenden Ansprüche, **dadurch gekennzeichnet, dass** durch einen die Schalleintrittsöffnung begrenzenden Bereich (46) des Halteelements (16) ein im Einbauzustand der Mikrofonvorrichtung (10) im Kraftwagen von außen sichtbarer Zierrand (46) für die Schalleintrittsöffnung gebildet ist.

6. Mikrofonvorrichtung (10) nach Anspruch 5, **dadurch gekennzeichnet, dass** ein Abstand der Mikrofonkapsel von dem Zierrand (46) kleiner als 5 mm, insbesondere kleiner als 3 mm, ist.

7. Mikrofonvorrichtung (10) nach einem vorhergehenden Ansprüche, **gekennzeichnet durch** eine Positionscodierung für den Einbau der Mikrofonvorrichtung (10) in dem Kraftwagen, welche entlang eines Umfangs (44) der Mikrofonanordnung (10) ausgebildete Rastelemente (38) aufweist, die unterschiedlich geformt sind und/oder entlang des Umfangs (44) in ungleichmäßigen Abständen und/oder entlang des Umfangs (44) seitlich unterschiedlich versetzt angeordnet sind.

8. Mikrofonvorrichtung (10) nach einem vorhergehenden Ansprüche, **dadurch gekennzeichnet, dass** eine bestimmungsgemäße Steckrichtung (26) zum Zusammenstecken der Steckeinrichtung (22) mit dem komplementären Steckteil (20) senkrecht oder zumindest quer zur einer bestimmungsgemäßen Einschubrichtung (28) des Mikrofonvorrichtung (10) in eine Fassung (36) des Kraftwagens ausgerichtet ist.

9. Verkleidungsteil (12) für einen Kraftwagen, welches eine Fassungseinrichtung (30, 36) mit einer Mikrofonvorrichtung (10) nach einem der vorhergehenden Ansprüche aufweist, wobei das Verkleidungsteil (12) eine Sichtseite (52) aufweist, die im Einbauzustand des Verkleidungsteils (12) im Kraftwagen sichtbar ist, und wobei die Fassungseinrichtung (36) eine Öffnung (30) in der Sichtseite (52) umfasst, durch welche die Mikrofonvorrichtung (10) von der Sichtseite (52) her in das Verkleidungsteil (12) eingeführt ist,
**dadurch gekennzeichnet, dass**
die Fassungseinrichtung (30, 36) zumindest ein Anschlagelement (54) aufweist, durch welches ein Einschubweg der Mikrofonvorrichtung (10) in das Verkleidungsteil (12) auf eine vorbestimmte Länge begrenzt ist, wobei der Einschubweg durch einen Ring (46) begrenzt ist, sodass der Ring (46) der Mikrofonvorrichtung (10) plan mit einer Oberfläche einer Sichtseite (52) des Verkleidungsteils (12) abschließt, die zum Kraftwageninnenraum weist.

10. Kraftwagen mit einem Verkleidungsteil (12) nach Anspruch 9 und/oder mit einer Mikrofonvorrichtung (10) nach einem der Ansprüche 1 bis 8.

## Claims

1. Microphone device (10) for a motor vehicle, comprising:
- a microphone capsule for detecting an ambient sound,
- a housing (14) for holding the microphone capsule, wherein the microphone capsule is arranged in the housing (14) for this purpose,
- an electrical connection interface, which has externally accessible terminal contacts for making electrical contact with the microphone capsule located in the housing (14) as well as a mechanical plug device (22) for plugging together with a complementary plug part (20) of an electronic device of the motor vehicle, wherein the terminal contacts are integrated in the plug device (22), and wherein the connection interface is configured wirelessly, and to this end the plug device (22) is formed as a part of the housing (14),
wherein the housing (14) is formed from at least two housing shells which are inserted in a holding element (16) that surrounds and thereby holds the housing shells together.

2. Microphone device (10) according to claim 1, **characterized in that** the plug device (22) is fitted as a plug or a plug trough (22).

3. Microphone device (10) according to claim 1 or 2, **characterized in that** the holding element (16) is a ring in which the housing shells are inserted.

4. Microphone device (10) according to any one of the preceding claims, **characterized in that** the housing (14) has a sound entry opening for ambient sound, and the sound entry opening is covered by an acoustically transparent covering element (50) which, in particular, is made of felt or fabric and is clamped between the housing (14) and the holding element (16).

5. Microphone device (10) according to any one of the preceding claims, **characterized in that** in a region (46) which limits the sound entry opening of the holding element (16) in the installed state of the microphone device (10) in a motor vehicle, a decorative rim (46) for the sound entry opening is formed that is visible from the outside.

6. Microphone device (10) according to claim 5, **characterized in that** the distance of the microphone capsule from the decorative rim (46) is less than 5 mm, in particular, less than 3 mm.

7. Microphone device (10) according to any one of the preceding claims, **characterized by** a position coding for installation of the microphone device (10) in the motor vehicle, which has latching elements (38) along a periphery (44) of the microphone device (10), which are differently shaped and/or arranged along the periphery (44) offset at irregular intervals and/or arranged along the periphery (44) offset differently sidewise.

8. Microphone device (10) according to one of the preceding claims, **characterized in that** a proper plugging direction (26) for plugging the plug device (22) with the complementary plug part (20) is aligned perpendicular or at least transverse to an intended insertion direction (28) of the microphone device (10) in a socket (36) of the motor vehicle.

9. Trim component (12) for a motor vehicle, comprising a socket device (30, 36) with a microphone device (10) according to any one of the preceding claims, wherein the trim component (12) has a visible side (52) which is visible in the installed state of the trim component (12) in the motor vehicle, and wherein the socket device (36) has an opening (30) in the visible side (52) through which the microphone device (10) is inserted in the trim component (12) from the visible side (52),
**characterized in that**
the socket device (30, 36) has at least one abutment member (54), through which an insertion path of the microphone device (10) in the trim component (12) is limited to a predetermined length, wherein the insertion path is limited by a ring (46), so that the ring (46) closes the microphone device (10) flush with a surface of a visible side (52) of the trim component (12), which faces the motor vehicle interior.

10. Motor vehicle with a trim component(12) according to claim 9 and/or a microphone device (10) according to any one of claims 1 to 8.

## Revendications

1. Dispositif à microphone (10) pour un véhicule automobile, comportant :
- une capsule microphonique pour acquérir un son ambiant,
- un boîtier (14) pour tenir la capsule microphonique, la capsule microphonique étant agencée à cet effet dans le boîtier (14),
- une interface de raccordement électrique qui comporte des contacts de raccordement accessibles de l'extérieur pour le contact électrique de la capsule microphonique se trouvant dans le boîtier (14) ainsi qu'un dispositif d'enfichage mécanique (22) pour l'assemblage avec une partie d'enfichage complémentaire (20) d'un appareil électronique du véhicule automobile, les contacts de raccordement étant intégrés dans le dispositif d'enfichage (22) et l'interface de raccordement étant conçue sans fil et le dispositif d'enfichage (22) étant conçu à cet effet comme une partie du boîtier (14),
le boîtier (14) étant formé d'au moins deux coques de boîtier qui sont enfichées dans un élément de maintien (16) qui entoure les coques de boîtier et les tient ainsi ensemble.

2. Dispositif à microphone (10) selon la revendication 1, **caractérisé en ce que** le dispositif d'enfichage (22) est conçu comme un connecteur ou comme un boîtier connecteur (22).

3. Dispositif à microphone (10) selon la revendication 1 ou 2, **caractérisé en ce que** l'élément de maintien (16) est un anneau dans lequel les coques de boîtier sont enfichées.

4. Dispositif à microphone (10) selon l'une des revendications précédentes, **caractérisé en ce que** le boîtier (14) comporte une ouverture d'entrée de son pour le son ambiant et l'ouverture d'entrée de son est couverte par un élément couvrant (50) laissant passer le son, notamment en feutre ou en tissu, qui est coincé entre le boîtier (14) et l'élément de maintien (16).

5. Dispositif à microphone (10) selon l'une des revendications précédentes, **caractérisé en ce qu'**un bord orné (46), visible de l'extérieur lorsque le dispositif à microphone (10) est monté dans le véhicule automobile, est formé pour l'ouverture d'entrée de son par une zone (46), délimitant l'ouverture d'entrée de son, de l'élément de maintien (16).

6. Dispositif à microphone (10) selon la revendication 5, **caractérisé en ce que** la distance de la capsule microphonique au bord orné (46) est inférieure à 5 mm, notamment inférieure à 3 mm.

7. Dispositif à microphone (10) selon l'une des revendications précédentes, **caractérisé par** un codage de position pour le montage du dispositif à microphone (10) dans le véhicule automobile qui comporte des éléments d'enclenchement (38) qui sont conçus le long d'une circonférence (44) du dispositif à microphone (10) et qui sont formés de différentes manières et/ou qui sont agencés à des distances différentes les uns par rapport aux autres le long de la circonférence (44) et/ou avec des décalages latéraux différents les uns par rapport aux autres le long de la circonférence (44).

8. Dispositif à microphone (10) selon l'une des revendications précédentes, **caractérisé en ce qu'**un sens d'enfichage correct (26) pour l'assemblage du dispositif d'enfichage (22) avec la partie d'enfichage complémentaire (20) est orienté perpendiculairement ou au moins transversalement par rapport à une direction d'insertion correcte (28) du dispositif à microphone (10) dans une douille (36) du véhicule automobile.

9. Pièce de garniture (12) pour un véhicule automobile, laquelle comporte un dispositif formant douille (30, 36) avec un dispositif à microphone (10) selon l'une des revendications précédentes, la pièce de garniture (12) comportant un côté décoratif (52) qui est visible lorsque la pièce de garniture (12) est montée dans le véhicule automobile et le dispositif formant douille (36) comprenant une ouverture (30) dans le côté décoratif (52) par laquelle le dispositif à microphone (10) est introduit à partir du côté décoratif (52) dans la pièce de garniture (12),
**caractérisé en ce que** le dispositif formant douille (30, 36) comporte au moins un élément de butée (54) par lequel une insertion du dispositif à microphone (10) dans la pièce de garniture (12) est limitée à une longueur prédéterminée, l'insertion étant limitée par un anneau (46) de telle sorte que l'anneau (46) du dispositif à microphone (10) aboutit dans le même plan qu'une surface d'un côté décoratif (52) de la pièce de garniture (12) qui est tournée vers l'habitacle du véhicule automobile.

10. Véhicule automobile avec une pièce de garniture (12) selon la revendication 9 et/ou avec un dispositif à microphone (10) selon l'une des revendications 1 à 8.
